# EUROPÄISCHE PATENTSCHRIFT

(11) **EP 0 458 192 B1**
(45) Veröffentlichungstag und Bekanntmachung des Hinweises auf die Patenterteilung: **20.07.1994**
(21) Anmeldenummer: 91107936.6
(22) Anmeldetag: 16.05.1991
(51) Int. Cl.: B60T 13/52

(54) **Pneumatischer Kraftverstärker für Fahrzeug-Bremsanlagen**
Pneumatic servo booster for vehicle brake systems
Amplificateur pneumatique de force pour circuits de freinage de véhicules

(30) Priorität: 17.05.1990 DE 9005629 U
(43) Veröffentlichungstag der Anmeldung: 27.11.1991
(73) Patentinhaber: LUCAS INDUSTRIES PUBLIC LIMITED COMPANY, Solihull, West Midlands B91 3TX (GB)
(72) Erfinder: Eiser, Joachim, W-5419 Grossmaischeid (DE); Arambasik, Ilja, W-5400 Koblenz (DE)
(74) Vertreter: Goetz, Rupert, Dipl.-Ing.

(56) Entgegenhaltungen:
- DE-A- 3 822 554
- DE-A- 3 923 843
- US-A- 3 646 758
- US-A- 4 716 814

## Beschreibung

Die Erfindung betrifft einen pneumatischen Kraftverstärker für Fahrzeug-Bremsanlagen nach dem Oberbegriff des Anspruchs 1.

Aus der US-PS 4716814 ist ein Kraftverstärker dieser Gattung bekannt, bei dem der äußere Luftfilter hinter der Hülse des Ventilgehäuses angeordnet und von dem Balg umschlossen ist. Der Teil des Balges, der den äußeren Luftfilter umschließt, ist mit Einströmöffnungen für die Umgebungsluft versehen. Diese Anordnung des äußeren Luftfilters vergrößert die axiale Baulänge des Kraftverstärkers, ohne daß dadurch zwischen den beiden Luftfiltern ein erheblicher Abstand entstehen würde, der dazu beitragen könnte, durch einströmende Luft hervorgerufene Geräusche zu dämpfen. Deshalb ist bei dem bekannten Kraftverstärker zwischen den beiden Filtern zur Geräuschdämpfung ein rohrförmiges Absorptionsglied zwischen einem axial äußeren und einem axial inneren ringförmigen Schild eingespannt. Das axial äußere Schild grenzt an den äußeren Luftfilter an und hat einen radial inneren Luftdurchlaß, so daß die vom äußeren Luftfilter kommende Luft in das Innere des Absorptionsgliedes einströmen kann. Das axial innere Schild hat einen radial äußeren Luftdurchlaß, so daß die Luft gezwungen ist, das Absorptionsglied radial zu durchströmen, um schließlich am axial inneren Schild vorbei zum inneren Luftfilter zu gelangen. Diese Anordnung bewirkt zwar eine Geräuschdämpfung, erhöht aber den Strömungswiderstand derart, daß die Ansprechgeschwindigkeit des Kraftverstärkers merklich vermindert wird.

Aus der DE 3822554 A1 ist ein weiterer pneumatischer Kraftverstärker bekannt, der sich von der eingangs beschriebenen Gattung im wesentlichen dadurch unterscheidet, daß zwischen dem Verstärkergehäuse und der Spritzwand ein rohrförmiger Adapter angeordnet ist, der einen vorderen und einen hinteren Flansch aufweist. Der vordere Flansch ist am Verstärkergehäuse, und der hintere Flansch an der Spritzwand befestigt. Der axial nach hinten wegragende Kragen des Verstärkergehäuses endet innerhalb des Adapters, ohne die Spritzwand zu erreichen. An einem vom hinteren Flansch des Adapters ringförmig nach innen ragenden Vorsprung ist eine Schutzhülse befestigt, die sich durch die Spritzwand hindurch nach hinten erstreckt und einen Teil der zylindrischen Hülse des Ventilgehäuses mit radialem Abstand umschließt. Der Balg ist mit einem vorderen Randabschnitt zwischen dem hinteren Flansch des Adapters und der Spritzwand eingespannt, umschließt die Schutzhülse und erstreckt sich von dieser aus als Faltenbalg weiter nach hinten zum Betätigungsglied. Der äußere ringförmige Luftfilter ist zwischen dem Adapter und dem Kragen des Verstärkergehäuses angeordnet; der innere Luftfilter ist innerhalb der Hülse nahe deren hinterem Ende angeordnet. Im Adapter sind axial vor dem äußeren Luftfilter Einströmöffnungen für die Umgebungsluft vorgesehen.

Diese Anordnung hat eine besonders große axiale Baulänge und erfordert einen verhältnismäßig großen Herstellungs- und Montageaufwand. Die Umgebungsluft wird aus dem Motorraum angesaugt und kann deshalb Öldämpfe und andere Verunreinigungen enthalten, die von den Luftfiltern möglicherweise nicht vollständig abgefangen werden können.

Der Erfindung liegt die Aufgabe zugrunde, einen pneumatischen Kraftverstärker für Fahrzeug-Bremsanlagen derart weiterzubilden, daß er bei geringem Herstellungs- und Montageaufwand eine gute Geräuschdämpfung aufweist.

Die Aufgabe ist erfindungsgemäß mit den Merkmalen des Anspruchs 1 gelöst.

Vorteilhafte Weiterbildungen der Erfindung sind Gegenstand der Unteransprüche.

Ein Ausführungsbeispiel der Erfindung wird im folgenden anhand schematischer Zeichnungen mit weiteren Einzelheiten erläutert. Es zeigen:
- Fig. 1: einen pneumatischen Kraftverstärker nach der Erfindung in einem axialen Schnitt,
- Fig. 2: eine Einzelheit aus Fig. 1 in größerem Maßstab,
- Fig. 3: den hinteren Bereich der Fig. 1 in noch größerem Maßstab und
- Fig. 4: die Teilansicht in Richtung des Pfeils IV in Fig. 3.

Der dargestellte Kraftverstärker gehört zur Tandembauart und hat ein Verstärkergehäuse 10 aus dünnem Blech mit einer Vorderwand 12, einem Mantel 14 und einer Rückwand 16. Der Innenraum des Verstärkergehäuses 10 ist durch eine ortsfeste Zwischenwand 18 sowie eine vordere bewegliche Wand 20 und eine hintere bewegliche Wand 22 unterteilt. Durch das Verstärkergehäuse 10 erstrecken sich zwei achsparallele Stangen 24, von denen nur eine dargestellt ist; jede von ihnen hat einen durch die Vorderwand 12 nach vorne ragenden Gewindebolzen 26 zum Befestigen eines Hauptbremszylinders sowie einen durch die Rückwand 16 ragenden hinteren Gewindebolzen 28 zum Befestigen an einer Spritzwand 30 eines Kraftfahrzeugs.

Die vordere bewegliche Wand 20 ist gegen jede der Stangen 24 durch eine vordere Manschette 32 abgedichtet; in entsprechender Weise ist die hintere bewegliche Wand 22 gegen jede der beiden Stangen 24 durch eine hintere Manschette 34 abgedichtet. Auf diese Weise sind im Verstärkergehäuse 10 eine vordere Vakuumkammer 36 sowie eine hintere Vakuumkammer 38 und eine vordere Druckkammer 40 und eine hintere Druckkammer 42 ausgebildet. Die beiden Vakuumkammern 36 und 38 sind ständig miteinander sowie mit einer nicht dargestellten Vakuumquelle, beispielsweise einem Saugrohr eines Verbrennungsmotors, verbunden. Die beiden Druckkammern 40 und 42 sind ständig miteinander verbunden und lassen sich über ein Steuerventil, das im folgenden beschrieben wird, wahlweise mit den beiden Vakuumkammern 36 und 38 oder mit der äußeren Umgebung verbinden.

An der Rückwand 16 des Verstärkergehäuses 10 ist ein Kragen 44 ausgebildet, der sich nach hinten erstreckt und eine ringförmige Vertiefung 46 aufweist, die durch einen hinteren Rand 48 begrenzt ist. Das Steuerventil hat ein Ventilgehäuse 50, das vom Kragen 44 umschlossen und in seinem hinteren Bereich als zylindrische Hülse 52 ausgebildet ist. In den Kragen 44 ist von hinten her eine Dichtung 54, im dargestellten Beispiel eine Lippendichtung eingesetzt, in der die Hülse 52 axial verschiebbar geführt ist.

Die hintere bewegliche Wand 22 ist dicht an dem Ventilgehäuse 50 befestigt und mit diesem zu gemeinsamer Axialbewegung verbunden. An das Ventilgehäuse 50 schließt sich nach vorne ein zentrales Rohrstück 56 an, das in der ortsfesten Zwischenwand 18 abgedichtet und axial verschiebbar geführt ist und durch eine an der Vorderwand 12 des Verstärkergehäuses 10 abgestützte Rückstellfeder 58 nach hinten vorgespannt ist. Die vordere bewegliche Wand 20 ist mit dem zentralen Rohrstück 56 dicht und zu gemeinsamer Axialbewegung verbunden.

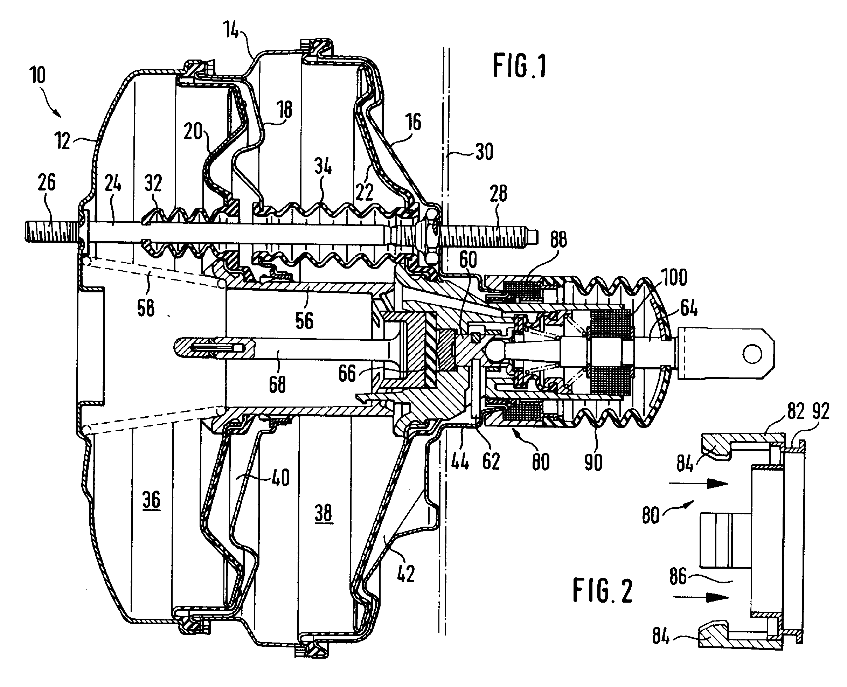

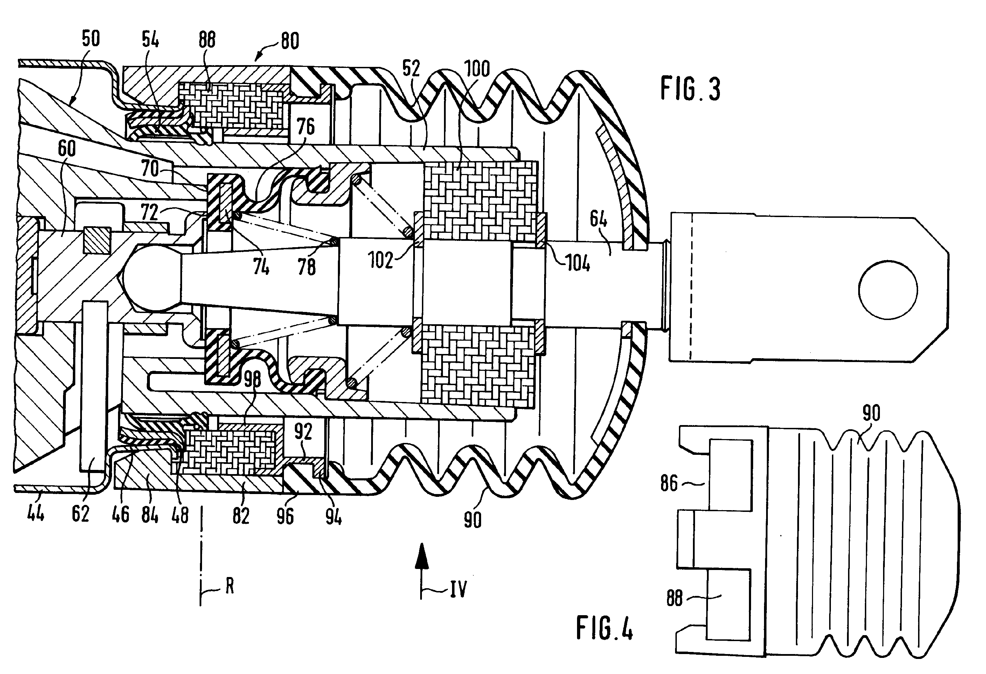

Innerhalb des Ventilgehäuses 50 ist ein Ventilkörper 60 angeordnet, dessen in Fig. 1 und 3 abgebildete Ruhestellung durch ein an ihm befestigtes und mit dem Verstärkergehäuse 10 zusammenwirkendes Anschlagglied 62 festgelegt ist. Am Ventilkörper 60 greift das vordere Ende eines Betätigungsgliedes 64 an, dessen hinteres Ende im Einbauzustand mit einem nicht dargestellten Bremspedal verbunden ist. Der Ventilkörper 60 stützt sich über ein kraftübersetzendes elastisches Zwischenglied 66 an einem Kraftabgabeglied 68 ab, das wie das Betätigungsglied 64 stangenförmig ausgebildet und mit ihm im wesentlichen gleichachsig angeordnet ist.

Am Ventilgehäuse 50 und am Ventilkörper 60 ist je ein ringförmiger Ventilsitz 70 bzw. 72 ausgebildet; diese beiden Ventilsitze sind konzentrisch zueinander angeordnet und liegen in der abgebildeten Ruhestellung in einer gemeinsamen achsnormalen Ebene R. Den beiden Ventilsitzen 70 und 72 ist eine gemeinsame Ventilplatte 74 zugeordnet, die durch einen Faltenbalg 76 dicht mit der Innenwand der zylindrischen Hülse 52 verbunden und durch eine am Betätigungsglied 64 abgestützte Feder 78 nach vorne, zu den beiden Ventilsitzen 70 und 72 hin, vorgespannt ist.

Am Kragen 44 ist ein zweiteiliger Haltering 80 befestigt, der sich von der achsnormalen Ebene R ungefähr gleichweit nach vorne und nach hinten erstreckt. Zum Haltering 80 gehört ein vorderes Ringteil 82 mit vier um je 90° gegeneinander versetzt nach vorne ragenden Haken 84, die vor dem Rand 48 des Kragens 44 in dessen ringförmige Vertiefung 46 eingerastet sind und zwischen sich Einströmöffnungen 86 freilassen. Das vordere Ringteil 82 umschließt einen ringförmigen äußeren Luftfilter 88. An den Haltering 80 schließt sich ein ziehharmonikaartiger Balg 90 an, der die zylindrische Hülse 52 mit radialem Abstand umschließt und hinter dieser am Betätigungsglied 64 dicht befestigt ist.

Zum Haltering 80 gehört ferner ein hinteres Ringteil 92, das von hinten her in das vordere Ringteil 82 eingeschraubt oder eingerastet ist und einen radial nach außen ragenden hinteren Flansch 94 aufweist. Zwischen diesem Flansch 94 und einer hinteren Stirnfläche des vorderen Ringteils 82 ist ein vorderer Randwulst 96 des Balges 90 dicht und fest eingespannt. Das hintere Ringteil 92 hat ferner einen inneren Kragen 98, der in den ringförmigen äußeren Luftfilter 88 eingreift und zwischen sich und der zylindrischen äußeren Mantelfläche der Hülse 52 einen Ringraum freiläßt.

Das stangenförmige Betätigungsglied 64 erstreckt sich axial durch einen inneren Luftfilter 100 hindurch, der innerhalb des hinteren Endbereichs der zylindrischen Hülse 52 angeordnet und durch zwei Sicherungsringe 102 und 104 zu gemeinsamer Axialbewegung mit dem Betätigungsglied 64 verbunden ist. Die beiden Luftfilter 88 und 100 sind in bezug zueinander und zu den beiden Ventilsitzen 70 und 72 so angeordnet, daß der Strömungsweg vom äußeren Luftfilter 88 zum inneren Luftfilter 100 ungefähr gleichlang ist wie der Strömungsweg vom inneren Luftfilter 100 zu den beiden Ventilsitzen 70 und 72.

Wenn das Betätigungsglied 64 aus der abgebildeten Ruhestellung nach vorne geschoben wird, so bewegt sich der Ventilsitz 72 gegenüber der Ventilplatte 74 nach vorne. Infolgedessen wird Luft aus der Umgebung durch die Einströmöffnungen 86 hindurch und weiter durch den äußeren Luftfilter 88 und den inneren Luftfilter 100 angesaugt, so daß der bisher mit dem geringen Druck in den Vakuumkammern 36 und 38 übereinstimmende Druck in den beiden Druckkammern 40 und 42 steigt und sich dem Umgebungsdruck nähert. Schwingungen in der angesaugten Luft werden durch die beschriebene Anordnung der beiden Luftfilter 88 und 100 besonders wirksam gedämpft.

## Patentansprüche

1. Pneumatischer Kraftverstärker für Fahrzeug-Bremsanlagen mit
- einem Verstärkergehäuse (10), das eine zur Befestigung an einer Spritzwand (30) eines Fahrzeugs ausgebildete Rückwand (16) aufweist,
- mindestens einer beweglichen Wand (20, 22), die im Verstärkergehäuse (10) zwischen einer Vakuumkammer (36, 38) und einer Druckkammer (40, 42) angeordnet und mit einem Kraftabgabeglied (68) verbunden ist,
- einem Kragen (44), der von der Rückwand (16) des Verstärkergehäuses (10) axial wegragt, sich in Einbaustellung des Kraftverstärkers nach hinten durch die Spritzwand (30) hindurcherstreckt und einen hinter dieser angeordneten hinteren Rand (48) aufweist,
- einem Ventilgehäuse (50), das mit der beweglichen Wand (20, 22) zu gemeinsamer Axialbewegung verbunden ist und eine zylindrische Hülse (52) aufweist, die in einer in den Kragen (44) eingebauten Dichtung (54) geführt ist,
- einem Ventilkörper (60), der im Ventilgehäuse (50) geführt und mit einem Betätigungsglied (64) axial verschiebbar ist zwischen einer Ruhestellung, in der die Druckkammer (40, 42) nach außen abgeschlossen und mit der Vakuumkammer (36, 38) verbunden ist, und einer Betätigungsstellung, in der die Druckkammer (40, 42) von der Vakuumkammer (36, 38) getrennt und durch die Hülse (52) hindurch mit der äußeren Umgebung verbunden ist,
- einem Balg (90), der ein mit dem hinteren Rand (48) des Kragens (44) verbundenes vorderes Ende sowie ein mit dem Betätigungsglied (64) verbundenes hinteres Ende aufweist und die Hülse (52) mit radialem Abstand umschließt, und
- einem äußeren und einem inneren ringförmigen Luftfilter (88, 100), die gleichachsig mit der Hülse (52) auf dem Strömungsweg der Umgebungsluft zum Ventilkörper (60) hintereinander angeordnet sind,
dadurch **gekennzeichnet**, daß der äußere Luftfilter (88) unmittelbar hinter dem hinteren Rand (48) des Kragens (44) rings um die Hülse (52) des Ventilgehäuses (50) angeordnet und in einem Haltering (80) gehalten ist, der ein am hinteren Rand (48) des Kragens (44) eingerastetes vorderes Ringteil (82) sowie ein das vordere Ende des Balges (90) haltendes hinteres Ringteil (92) aufweist und mit Einströmöffnungen (86) für die Umgebungsluft versehen ist.

2. Kraftverstärker nach Anspruch 1,
dadurch **gekennzeichnet**, daß das vordere Ringteil (82) Haken (84) aufweist, die vor dem hinteren Rand (48) des Kragens (44), welcher nach außen umgebördelt ist, eingerastet sind.

3. Kraftverstärker nach Anspruch 2,
dadurch **gekennzeichnet**, daß die Einströmöffnungen (86) zwischen den Haken (84) ausgebildet sind.

4. Kraftverstärker nach einem der Ansprüche 1 bis 3,
dadurch **gekennzeichnet**, daß das hintere Ringteil (92) gesondert von dem vorderen Ringteil (82) hergestellt und an diesem befestigt ist.

5. Kraftverstärker nach Anspruch 4,
dadurch **gekennzeichnet**, daß der Balg (90) einen vorderen Randwulst (96) hat, der zwischen einem Flansch (94) des hinteren Ringteils (92) und dem vorderen Ringteil (82) eingeklemmt ist.

6. Kraftverstärker nach Anspruch 4 oder 5,
dadurch **gekennzeichnet,** daß der äußere Luftfilter (88) auf einen Kragen (98) des hinteren Ringteils (92) aufgesteckt und axial zwischen den beiden Ringteilen (82, 92) gehalten ist.

7. Kraftverstärker nach einem der Ansprüche 1 bis 6,
dadurch **gekennzeichnet,** daß das vordere Ringteil (82) des Halterings (80) sich ungefähr gleichweit nach vorne und nach hinten von einer radialen Ebene (R) wegerstreckt, in der ein Ventilsitz (72) des Ventilkörpers (60) in dessen Ruhestellung liegt.

8. Kraftverstärker nach einem der Ansprüche 1 bis 7,
dadurch **gekennzeichnet,** daß die Dichtung (54), in der die Hülse (52) geführt ist, von hinten her in den Kragen (44) des Verstärkergehäuses (10) eingesetzt und durch den Haltering (80) festgehalten ist.

9. Kraftverstärker nach einem der Ansprüche 1 bis 7,
dadurch **gekennzeichnet,** daß der innere Luftfilter (100) auf dem Betätigungsglied (64) derart befestigt ist, daß in dessen Ruhestellung der Strömungsweg der Luft vom äußeren Luftfilter (88) zum inneren Luftfilter (100) mindestens annähernd gleichlang ist wie vom inneren Luftfilter (100) zum Ventilkörper (60).

## Claims

1. A pneumatic servo booster for vehicle brake systems, comprising
- a booster casing (10) which includes a backwall (16) designed to be fastened to a dashboard (30) of a vehicle,
- a least one movable wall (20, 22) arranged in the booster casing (10) between a vacuum chamber (36, 38) and a pressure chamber (40, 42) and connected to a power output member (68),
- a collar (44) which projects axially from the backwall (16) of the booster casing (10) and extends to the rear through the dashboard (30) when the booster is in built-in position, having a rear edge (48) which is located behind the dashboard,
- a valve body (50) which is connected to the movable wall (20, 22) for common axial movement and comprises a cylindrical sleeve (52) guided in a seal (54) which is fitted in the collar (44),
- a valve closing member (60) which is guided in the valve body (50) and is axially displaceable by an actuating member (64) between an inoperative position, at which the pressure chamber (40, 42) is closed towards the outside and communicates with the vacuum chamber (36, 38), and an operative position, at which the pressure chamber (40, 42) is disconnected from the vacuum chamber (36, 38) and communicates through the sleeve (52) with the outside surroundings,
- a bellows (90) enclosing the sleeve (52) radially spaced from the same and having a front end which is connected to the rear edge (48) of the collar (44) and a rear end which is connected to the actuating member (64), and
- outer and inner annular air filters (88, 100) disposed one behind the other coaxially with the sleeve (52) in the path of flow of the ambient air to the valve closing member (60),
**characterized** in that the outer air filter (88) is disposed directly behind the rear edge (48) of the collar (44) around the sleeve (52) of the valve body (50) and held in a retainer ring (80) which comprises a front ring member (82) snapped into engagement at the rear edge (48) of the collar (44) and a rear ring member (92) retaining the front end of the bellows (90) and being provided with inlet openings (86) for ambient air flow.

2. The booster as claimed in claim 1, characterized in that the front ring member (82) includes hooks (84) which are snaped into engagement in front of the rear edge (48) of the collar (44) which is flanged outwardly.

3. The booster as claimed in claim 2, characterized in that the inlet openings (86) are formed between the hooks (84).

4. The booster as claimed in any one of claims 1 to 3, characterized in that the rear ring member (92) is produced separately from the front ring member (82) and then fixed to the same.

5. The booster as claimed in claim 4, characterized in that the bellows (90) has a front edge bead (96) which is clamped between a flange (94) of the rear ring member (92) and the front ring member (82).

6. The booster as claimed in claim 4 or 5, characterized in that the outer air filter (88) is slipped on a collar (98) of the rear ring member (92) and retained axially between the two ring members (82, 92).

7. The booster as claimed in any one of claims 1 to 6, characterized in that the front ring member (82) of the retainer ring (80) extends approximately equally far to the front and rear from a radial plane (R) in which a valve seat (72) of the valve closing member (60) is located in the inoperative position of the latter.

8. The booster as claimed in any one of claims 1 to 7, characterized in that the seal (54) in which the sleeve (52) is guided is inserted from the rear into the collar (44) of the booster casing (10) and firmly held by the retainer ring (80).

9. The booster as claimed in any one of claims 1 to 7, characterized in that the inner air filter (100) is secured on the actuating member (64) in such a way that the flow of air, in the inoperative position of the actuating member, from the outer air filter (88) to the inner air filter (100) is at least approximately as long as that from the inner air filter (100) to the valve closing member (60).

## Revendications

1. Amplificateur pneumatique de force pour circuits de freinage de véhicule, comportant
- un carter (10) d'amplificateur, présentant une paroi arrière (16) réalisée pour la fixation sur un tablier d'auvent (30) d'un véhicule,
- au moins une paroi mobile (20, 22), disposée dans le carter (10) de l'amplificateur, entre une enceinte à vide (36, 38) et une enceinte à pression (40, 42), et reliée à un organe (68) d'application d'une force,
- un collet (44) dépassant axialement de la paroi arrière (16) du carter (10) de l'amplificateur, traversant vers l'arrière le tablier d'auvent (30), quand l'amplificateur est monté à son emplacement, et présentant un rebord arrière (48), disposé derrière ce tablier,
- un boîtier de soupape (50), relié à la paroi mobile (20, 22) pour permettre un déplacement axial de l'ensemble, et présentant une douille cylindrique (52), guidée dans un joint (54) monté dans le collet (44),
- un corps de soupape (60), guidé dans le boîtier de soupape (50) et pouvant se déplacer axialement avec un organe d'actionement (64) entre une position de repos, dans laquelle l'enceinte à pression (40, 42) est fermée vers l'extérieur et reliée à l'enceinte à vide (36, 38), et une position d'actionnement, dans laquelle l'enceinte à pression (40, 42) est séparée de l'enceinte à vide (36, 38) et est reliée à l'extérieur au travers de la douille (52),
- un soufflet (90), qui présente une extrémité avant, reliée au rebord arrière (48) du collet (44) , et une extrémité arrière, reliée à l'organe d'actionement (64), et entoure la douille (52), à une certaine distance radiale, et
- un filtre à air extérieur (88) et un filtre à air intérieur (100), tous deux de forme cylindrique, disposés l'un derrière l'autre, avec le même axe que la douille (52) , sur le trajet d'écoulement de l'air environnant allant vers le corps de soupape (60);
caractérisé en ce que le filtre à air extérieur (88) est disposé directement derrière le rebord arrière (48) du collet (44), tout autour de la douille (52) du boîtier de soupape (50), et est fixé dans une bague de fixation (80) qui présente une partie avant (82) engagée dans le rebord arrière (48) du collet (44), et une partie arrière (92), maintenant l'extrémité avant du soufflet (90), cette bague présentant des ouvertures (86) pour l'air environnant.

2. Amplificateur de force suivant la revendication 1, caractérisé en ce que la partie avant de bague (82) présente des crochets (84) qui sont engagés, en faisant prise, en avant du rebord arrière (48) du collet (44), qui est rabattu vers l'extérieur.

3. Amplificateur de force suivant la revendication 2, caractérisé en ce que les ouvertures d'admission (86) sont réalisées entre les crochets (84).

4. Amplificateur de force suivant l'une quelconque des revendications 1 à 3, caractérisé en ce que la partie arrière de bague (92) est réalisée séparément de la partie avant de bague (82), et est fixée sur cette dernière.

5. Amplificateur de force suivant la revendication 4, caractérisé en ce que le soufflet (90) présente un bord avant formant bourrelet (96), qui est pincé entre une bride (94) de la partie arrière de bague (92) et la partie avant de bague (82).

6. Amplificateur de force suivant la revendication 4 ou la revendication 5, caractérisé en ce que le filtre à air extérieur (88) est enfilé sur un collet (98) de la partie arrière de bague (92) et est maintenu axialement entre les deux parties de bague (82, 92).

7. Amplificateur de force suivant l'une quelconque des revendications 1 à 6, caractérisé en ce que la partie avant (82) de la bague de fixation (80) est disposée sensiblement à égale distance, vers l'avant et vers l'arrière, d'un plan radial (R), dans lequel se trouve un siège de soupape (72) du corps de soupape (60) dans sa position de repos.

8. Amplificateur de force suivant l'une quelconque des revendications 1 à 7, caractérisé en ce que le joint d'étanchéité (54), dans lequel est guidée la douille (52) est enfoncé depuis l'arrière dans le collet (44) du carter de l'amplificateur (10) et est maintenu fixé par la bague de fixation (80).

9. Amplificateur de force suivant l'une quelconque des revendications 1 à 7, caractérisé en ce que le filtre à air intérieur (100) est fixé sur l'organe d'actionement (64) de telle façon que, dans sa position de repos, le trajet d'écoulement de l'air, allant du filtre à air extérieur (88) au filtre à air intérieur (100), ait, au moins aproxilativement, la même longueur que celui qui va du filtre à air intérieur (100) au corps de soupape (60).
